# EUROPEAN PATENT APPLICATION

(11) **EP 2 919 502 A1**
(43) Date of publication of application: **16.09.2015**
(21) Application number: 12887872.5
(22) Date of filing: 09.11.2012
(51) Int. Cl.: H04W 16/12

(54) **METHOD AND APPARATUS FOR INFORMATION TRANSMISSION**

(71) Applicant: Huawei Technologies Co., Ltd., Longgang District Shenzhen, Guangdong 518129 (CN)
(72) Inventor: QUAN, Wei, Shenzhen Guangdong 518129 (CN); ZHANG, Jian, Shenzhen Guangdong 518129 (CN)
(74) Representative: Thun, Clemens
(86) International application number: PCT/CN2012/084395
(87) International publication number: WO 2014/071615

(57) **Abstract**

Embodiments of the present invention relate to an information transmission method and apparatus. The information transmission method includes: determining a time-frequency resource used by an MIB of a serving cell, where the time-frequency resource used by the MIB of the serving cell is different from a time-frequency resource used by an MIB of a neighboring cell; and receiving the MIB of the serving cell on the time-frequency resource. In the embodiments of the present invention, information of different cells is carried on different time-frequency resources, and therefore, interference between the information of different cells can be effectively reduced or avoided, thereby improving information transmission quality, and enhancing system performance.

## Description

### TECHNICAL FIELD

The present invention relates to the communications field, and specifically, to an information transmission method and apparatus, for example, a method and an apparatus for transmitting a master information block (MIB, Master Information Block), and a method and an apparatus for transmitting enhanced physical downlink control channel (EPDCCH, Enhanced Physical Downlink Control Channel) information.

### BACKGROUND

In a 3^{rd} Generation Partnership Project (3GPP, 3^{rd} Generation Partnership Project) Long Term Evolution (LTE, Long Term Evolution) or LTE-advanced (LTE-A, LTE-advanced) system, a user equipment (UE, User Equipment) first detects a primary synchronization signal (PSS, Primary Synchronization signal) and a secondary synchronization signal (SSS, Secondary Synchronization signal) to obtain a physical cell identifier (PCI, Physical Cell Identity), frame synchronization, and subframe synchronization; then receives an MIB, where the MIB generally includes information such as downlink bandwidth information, physical HARQ indicator channel (PHICH, Physical HARQ Indication Channel) and system frame number (SFN, system frame number) information, and system downlink bandwidth; and obtains physical downlink control channel (PDCCH, Physical Downlink Control Channel) information by parsing the MIB and a physical control format indicator channel (PCFICH, Physical Control Format Indicator Channel), where the PDCCH is used to carry control signaling that is for uplink and downlink data scheduling. Generally, the PDCCH includes a common search space and a UE dedicated search space, where the common search space is used to schedule non-UE dedicated information, for example, scheduling other broadcast messages, scheduling paging, and scheduling power control commands, and may also be used to schedule UE dedicated information, for example, uplink and downlink data transmission of the UE; and the dedicated search space can be used to schedule only UE dedicated information, for example, uplink and downlink data transmission of the UE. Therefore, once MIBs of different cells use same time-frequency resources, interference may result. If the interference reaches an extent, normal camping and services of the UE will be further affected.

In addition, an EPDCCH is introduced to the LTE-A system. The EPDCCH is not in a control area of the first n symbols of a subframe, but is in an area, of the subframe, in which downlink data is transmitted, and uses a frequency different from a frequency used by a physical downlink sharing channel (PDSCH, Physical Downlink Sharing Channel) and occupies a physical resource block (PRB, Physical Resource Block) different from a PRB occupied by the PDSCH. The EPDCCH may perform precoding transmission as the PDSCH does, and is demodulated based on a UE specific reference signal. Similarly, the EPDCCH may also include a common search space and a UE dedicated search space, where the UE dedicated search space may be staggered from an EDPCCH of a neighboring cell by means of the foregoing frequency division. However, once common search spaces of EPDCCHs of different cells use same time-frequency resources, interference will also result. If the interference reaches an extent, normal camping and services of the UE will also be further affected.

### SUMMARY

An information transmission method and apparatus are proposed by the present invention, which aims to resolve a problem about how to reduce or avoid interference between information (such as MIBs or EPDCCH information) of different cells.

According to a first aspect, an information transmission method is provided, including: determining a time-frequency resource used by an MIB of a serving cell, where the time-frequency resource used by the MIB of the serving cell is different from a time-frequency resource used by an MIB of a neighboring cell; and receiving the MIB of the serving cell on the time-frequency resource.

With reference to the first aspect, in a first implementation manner of the first aspect, the determining a time-frequency resource used by an MIB of a serving cell includes: determining, according to a detected PSS or SSS of the serving cell, the time-frequency resource used by the MIB of the serving cell; or acquiring a PCI of the serving cell according to a detected PSS and a detected SSS of the serving cell, and determining, according to the PCI of the serving cell, the time-frequency resource used by the MIB of the serving cell; or determining, according to a detected PCFICH of the serving cell, the time-frequency resource used by the MIB of the serving cell.

With reference to the first implementation manner of the first aspect, in a second implementation manner of the first aspect, the determining, according to a detected PSS or SSS of the serving cell, the time-frequency resource used by the MIB of the serving cell includes: determining a numerical value N, where the numerical value N is an integer greater than 1; and determining, according to a result of the PSS or SSS modulo the numerical value N, the time-frequency resource that is used by the MIB of the serving cell and corresponding to the result.

With reference to the first implementation manner of the first aspect, in a third implementation manner of the first aspect, the determining, according to the PCI of the serving cell, the time-frequency resource used by the MIB of the serving cell includes: determining a numerical value N, where the numerical value N is an integer greater than 1; and determining, according to a result of the PCI modulo the numerical value N, the time-frequency resource that is used by the MIB of the serving cell and corresponding to the result.

With reference to the first aspect and the foregoing implementation manners of the first aspect, the MIB includes SFN information, or SFN information and downlink bandwidth information.

According to a second aspect, an information transmission method is provided, including: determining a time-frequency resource used by an MIB of a serving cell, where the time-frequency resource used by the MIB of the serving cell is different from a time-frequency resource used by an MIB of a neighboring cell; and sending the MIB of the serving cell on the time-frequency resource.

With reference to the second aspect, in a first implementation manner of the second aspect, the determining a time-frequency resource used by an MIB of a serving cell includes: determining, according to a detected PSS or SSS of the serving cell, the time-frequency resource used by the MIB of the serving cell; or acquiring a PCI of the serving cell according to a detected PSS and a detected SSS of the serving cell, and determining, according to the PCI of the serving cell, the time-frequency resource used by the MIB of the serving cell; or determining, according to a detected PCFICH of the serving cell, the time-frequency resource used by the MIB of the serving cell.

With reference to the first implementation manner of the second aspect, in a second implementation manner of the second aspect, the determining, according to a detected PSS or SSS of the serving cell, the time-frequency resource used by the MIB of the serving cell includes: determining a numerical value N, where the numerical value N is an integer greater than 1; and determining, according to a result of the PSS or SSS modulo the numerical value N, the time-frequency resource that is used by the MIB of the serving cell and corresponding to the result.

With reference to the first implementation manner of the second aspect, in a third implementation manner of the second aspect, the determining, according to the PCI of the serving cell, the time-frequency resource used by the MIB of the serving cell includes: determining a numerical value N, where the numerical value N is an integer greater than 1; and determining, according to a result of the PCI modulo the numerical value N, the time-frequency resource that is used by the MIB of the serving cell and corresponding to the result.

With reference to the second aspect and the foregoing implementation manners of the second aspect, the MIB includes SFN information, or SFN information and downlink bandwidth information.

According to a third aspect, an information transmission method is provided, including: determining a time-frequency resource used by EPDCCH information of a serving cell, where the time-frequency resource used by the EPDCCH information of the serving cell is different from a time-frequency resource used by EPDCCH information of a neighboring cell; and receiving the EPDCCH information of the serving cell on the time-frequency resource.

With reference to the third aspect, in a first implementation manner of the third aspect, the determining a time-frequency resource used by EPDCCH information of a serving cell includes: determining, according to a detected PSS or SSS of the serving cell, the time-frequency resource used by the EPDCCH information of the serving cell; or acquiring a PCI of the serving cell according to a detected PSS and a detected SSS of the serving cell, and determining, according to the PCI of the serving cell, the time-frequency resource used by the EPDCCH information of the serving cell; or determining, according to a detected PCFICH of the serving cell, the time-frequency resource used by the EPDCCH information of the serving cell.

With reference to the first implementation manner of the third aspect, in a second implementation manner of the third aspect, the determining, according to a detected PSS or SSS of the serving cell, the time-frequency resource used by the EPDCCH information of the serving cell includes: determining a numerical value N, where the numerical value N is an integer greater than 1; and determining, according to a result of the PSS or SSS modulo the numerical value N, the time-frequency resource that is used by the EPDCCH information of the serving cell and corresponding to the result.

With reference to the first implementation manner of the third aspect, in a third implementation manner of the third aspect, the determining, according to the PCI of the serving cell, the time-frequency resource used by the EPDCCH information of the serving cell includes: determining a numerical value N, where the numerical value N is an integer greater than 1; and determining, according to a result of the PCI modulo the numerical value N, the time-frequency resource that is used by the EPDCCH information of the serving cell and corresponding to the result.

With reference to the third aspect, in a fourth implementation manner of the third aspect, the determining a time-frequency resource used by EPDCCH information of a serving cell includes: determining, according to a received MIB of the serving cell, the time-frequency resource used by the EPDCCH information of the serving cell, where a method for receiving the MIB of the serving cell is according to the first aspect and the implementation manners of the first aspect.

According to a fourth aspect, an information transmission method is provided, including: determining a time-frequency resource used by EPDCCH information of a serving cell, where the time-frequency resource used by the EPDCCH information of the serving cell is different from a time-frequency resource used by EPDCCH information of a neighboring cell; and sending the EPDCCH information of the serving cell on the time-frequency resource.

With reference to the fourth aspect, in a first implementation manner of the fourth aspect, the determining a time-frequency resource used by EPDCCH information of a serving cell includes: determining, according to a detected PSS or a SSS of the serving cell, the time-frequency resource used by the EPDCCH information of the serving cell; or acquiring a PCI of the serving cell according to a detected PSS and a detected SSS of the serving cell, and determining, according to the PCI of the serving cell, the time-frequency resource used by the EPDCCH information of the serving cell; or determining, according to a detected PCFICH of the serving cell, the time-frequency resource used by the EPDCCH information of the serving cell.

With reference to the first implementation manner of the fourth aspect, in a second implementation manner of the fourth aspect, the determining, according to a detected PSS or SSS of the serving cell, the time-frequency resource used by the EPDCCH information of the serving cell includes: determining a numerical value N, where the numerical value N is an integer greater than 1; and determining, according to a result of the PSS or SSS modulo the numerical value N, the time-frequency resource that is used by the EPDCCH information of the serving cell and corresponding to the result.

With reference to the first implementation manner of the fourth aspect, in a third implementation manner of the fourth aspect, the determining, according to the PCI of the serving cell, the time-frequency resource used by the EPDCCH information of the serving cell includes: determining a numerical value N, where the numerical value N is an integer greater than 1; and determining, according to a result of the PCI modulo the numerical value N, the time-frequency resource that is used by the EPDCCH information of the serving cell and corresponding to the result.

With reference to the fourth aspect, in a fourth implementation manner of the fourth aspect, the determining a time-frequency resource used by EPDCCH information of a serving cell includes: determining, according to a sent MIB of the serving cell, the time-frequency resource used by the EPDCCH information of the serving cell, where a method for sending the MIB of the serving cell is according to the second aspect and the implementation manners of the second aspect.

According to a fifth aspect, an information transmission apparatus is provided, including: a first determining unit, configured to determine a time-frequency resource used by an MIB of a serving cell, where the time-frequency resource used by the MIB of the serving cell is different from a time-frequency resource used by an MIB of a neighboring cell; and a first receiving unit, configured to receive the MIB of the serving cell on the time-frequency resource.

With reference to the fifth aspect, in a first implementation manner of the fifth aspect, the first determining unit is configured to: determine, according to a detected PSS or SSS of the serving cell, the time-frequency resource used by the MIB of the serving cell; or acquire a PCI of the serving cell according to a detected PSS and a detected SSS of the serving cell, and determine, according to the PCI of the serving cell, the time-frequency resource used by the MIB of the serving cell; or determine, according to a detected PCFICH of the serving cell, the time-frequency resource used by the MIB of the serving cell.

With reference to the first implementation manner of the fifth aspect, in a second implementation manner of the fifth aspect, the first determining unit is specifically configured to: determine a numerical value N, where the numerical value N is an integer greater than 1; and determine, according to a result of the PSS, SSS, or PCI modulo the numerical value N, the time-frequency resource that is used by the MIB of the serving cell and corresponding to the result.

With reference to the fifth aspect and the implementation manners of the fifth aspect, in a third implementation manner of the fifth aspect, the MIB includes SFN information, or SFN information and downlink bandwidth information.

According to a sixth aspect, an information transmission apparatus is provided, including: a second determining unit, configured to determine a time-frequency resource used by a master information block MIB of a serving cell, where the time-frequency resource used by the MIB of the serving cell is different from a time-frequency resource used by an MIB of a neighboring cell; and a first sending unit, configured to send the MIB of the serving cell on the time-frequency resource.

With reference to the sixth aspect, in a first implementation manner of the sixth aspect, the second determining unit is configured to:
determine, according to a detected PSS or SSS of the serving cell, the time-frequency resource used by the MIB of the serving cell; or acquire a PCI of the serving cell according to a detected PSS and a detected SSS of the serving cell, and determine, according to the PCI of the serving cell, the time-frequency resource used by the MIB of the serving cell; or determine, according to a detected PCFICH of the serving cell, the time-frequency resource used by the MIB of the serving cell.

With reference to the first implementation manner of the sixth aspect, in a second implementation manner of the sixth aspect, the second determining unit is specifically configured to: determine a numerical value N, where the numerical value N is an integer greater than 1; and determine, according to a result of the PSS, SSS, or PCI modulo the numerical value N, the time-frequency resource that is used by the MIB of the serving cell and corresponding to the result.

With reference to the sixth aspect and the implementation manners of the sixth aspect, in a third implementation manner of the sixth aspect, the MIB includes SFN information, or SFN information and downlink bandwidth information.

According to a seventh aspect, an information transmission apparatus is provided, including: a third determining unit, configured to determine a time-frequency resource used by EPDCCH information of a serving cell, where the time-frequency resource used by the EPDCCH information of the serving cell is different from a time-frequency resource used by EPDCCH information of a neighboring cell; and a second receiving unit, configured to receive the EPDCCH information of the serving cell on the time-frequency resource.

With reference to the seventh aspect, in a first implementation manner of the seventh aspect, the third determining unit is configured to: determine, according to a detected PSS or SSS of the serving cell, the time-frequency resource used by the EPDCCH information of the serving cell; or acquire a PCI of the serving cell according to a detected PSS and a detected SSS of the serving cell, and determine, according to the PCI of the serving cell, the time-frequency resource used by the EPDCCH information of the serving cell; or determine, according to a detected PCFICH of the serving cell, the time-frequency resource used by the EPDCCH information of the serving cell.

With reference to the first implementation manner of the seventh aspect, in a second implementation manner of the seventh aspect, the third determining unit is specifically configured to: determine a numerical value N, where the numerical value N is an integer greater than 1; and determine, according to a result of the PSS, SSS, or PCI modulo the numerical value N, the time-frequency resource that is used by the EPDCCH information of the serving cell and corresponding to the result.

With reference to the seventh aspect and the implementation manners of the seventh aspect, in a third implementation manner of the seventh aspect, the third determining unit is configured to: determine, according to a received MIB of the serving cell, the time-frequency resource used by the EPDCCH information of the serving cell.

According to an eighth aspect, an information transmission apparatus is provided, including: a fourth determining unit, configured to determine a time-frequency resource used by EPDCCH information of a serving cell, where the time-frequency resource used by the EPDCCH information of the serving cell is different from a time-frequency resource used by EPDCCH information of a neighboring cell; and a second sending unit, configured to send the EPDCCH information of the serving cell on the time-frequency resource.

With reference to the eighth aspect, in a first implementation manner of the eighth aspect, the fourth determining unit is configured to: determine, according to a detected PSS or SSS of the serving cell, the time-frequency resource used by the EPDCCH information of the serving cell; or acquire a PCI of the serving cell according to a detected PSS and a detected SSS of the serving cell, and determine, according to the PCI of the serving cell, the time-frequency resource used by the EPDCCH information of the serving cell; or determine, according to a detected PCFICH of the serving cell, the time-frequency resource used by the EPDCCH information of the serving cell.

With reference to the first implementation manner of the eighth aspect, in a second implementation manner of the eighth aspect, the fourth determining unit is specifically configured to: determine a numerical value N, where the numerical value N is an integer greater than 1; and determine, according to a result of the PSS, SSS, or PCI modulo the numerical value N, the time-frequency resource that is used by the EPDCCH information of the serving cell and corresponding to the result.

With reference to the eighth aspect and the implementation manners of the eighth aspect, in a third implementation manner of the eighth aspect, the fourth determining unit is configured to: determine, according to a sent MIB of the serving cell, the time-frequency resource used by the EPDCCH information of the serving cell.

According to a ninth aspect, a user equipment is provided, including: a processor, configured to determine a time-frequency resource used by an MIB or EPDCCH information of a serving cell, where the time-frequency resource used by the MIB or EPDCCH information of the serving cell is different from a time-frequency resource used by an MIB or EPDCCH information of a neighboring cell; and a receiver, configured to receive the MIB or EPDCCH information of the serving cell on the time-frequency resource.

With reference to the ninth aspect, in a first implementation manner of the ninth aspect, the processor is specifically configured to: determine, according to a detected PSS, SSS, PCI, or PCFICH of the serving cell, the time-frequency resource used by the MIB of the serving cell; or determine, according to a detected PSS, SSS, PCI, PCFICH, or MIB of the serving cell, the time-frequency resource used by the EPDCCH information of the serving cell.

According to a tenth aspect, a base station is provided, including: a processor, configured to determine a time-frequency resource used by an MIB or EPDCCH information of a serving cell, where the time-frequency resource used by the MIB or EPDCCH information of the serving cell is different from a time-frequency resource used by an MIB or EPDCCH information of a neighboring cell; and a transmitter, configured to send the MIB or EPDCCH information of the serving cell on the time-frequency resource.

With reference to the tenth aspect, in a first implementation manner of the tenth aspect, the processor is specifically configured to: determine, according to a detected PSS, SSS, PCI, or PCFICH of the serving cell, the time-frequency resource used by the MIB of the serving cell; or determine, according to a detected PSS, SSS, PCI, PCFICH, or MIB of the serving cell, the time-frequency resource used by the EPDCCH information of the serving cell.

In the embodiments of the present invention, information (such as MIBs or EPDCCH information) of different cells is carried on different time-frequency resources, and therefore, interference between the information of different cells can be effectively reduced or avoided, thereby improving information transmission quality, and enhancing system performance.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of a method for receiving an MIB according to an embodiment of the present invention;
FIG. 2 is a schematic diagram of time-frequency resources according to an embodiment of the present invention;
FIG. 3 is a schematic diagram of time-frequency resources according to another embodiment of the present invention;
FIG. 4 is a schematic diagram of time-frequency resources according to another embodiment of the present invention;
FIG. 5 is a schematic diagram of time-frequency resources according to another embodiment of the present invention;
FIG. 6 is a schematic diagram of time-frequency resources according to still another embodiment of the present invention;
FIG. 7 is a schematic diagram of time-frequency resources according to still another embodiment of the present invention;
FIG. 8 is a schematic diagram of time-frequency resources according to still another embodiment of the present invention;
FIG. 9 is a schematic diagram of transmitting an SFN according to an embodiment of the present invention;
FIG. 10 is a schematic diagram of transmitting an SFN according to another embodiment of the present invention;
FIG. 11 is a flowchart of a method for sending an MIB according to an embodiment of the present invention;
FIG. 12 is a flowchart of a method for receiving EPDCCH information according to an embodiment of the present invention;
FIG. 13 is a flowchart of a method for sending EPDCCH information according to an embodiment of the present invention;
FIG. 14 is a schematic structural diagram of an apparatus for receiving an MIB according to an embodiment of the present invention;
FIG. 15 is a schematic structural diagram of an apparatus for sending an MIB according to an embodiment of the present invention;
FIG. 16 is a schematic structural diagram of an apparatus for receiving EPDCCH information according to an embodiment of the present invention;
FIG. 17 is a schematic structural diagram of an apparatus for sending EPDCCH information according to an embodiment of the present invention;
FIG. 18 is a schematic structural diagram of a UE according to an embodiment of the present invention; and
FIG. 19 is a schematic structural diagram of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all embodiments of the present invention. All other embodiments obtained by a person of ordinary skill in the art based on the embodiments of the present invention without creative efforts shall fall within the protection scope of the present invention. The technical solutions of the embodiments of the present invention may be applied to various communications systems, such as GSM, Code Division Multiple Access (CDMA, Code Division Multiple Access) system, Wideband Code Division Multiple Access (WCDMA, Wideband Code Division Multiple Access Wireless), GPRS, and LTE systems.

A user equipment (UE, User Equipment) may also be called a mobile terminal (Mobile Terminal), a mobile station (Mobile Station), or the like, and may communicate with one or more core networks through a radio access network (such as RAN, Radio Access Network). The UE exchanges voice and/or data with the radio access network.

A base station may be a base station (Base Transceiver Station, BTS) in GSM or CDMA, or may be a base station (NodeB) in WCDMA, or may be an evolved NodeB (eNB or e-NodeB, evolutional Node B) in LTE. In addition, one base station may support/manage one or more cells (cell). When a UE needs to communicate with a network, the UE selects a cell to initiate network access.

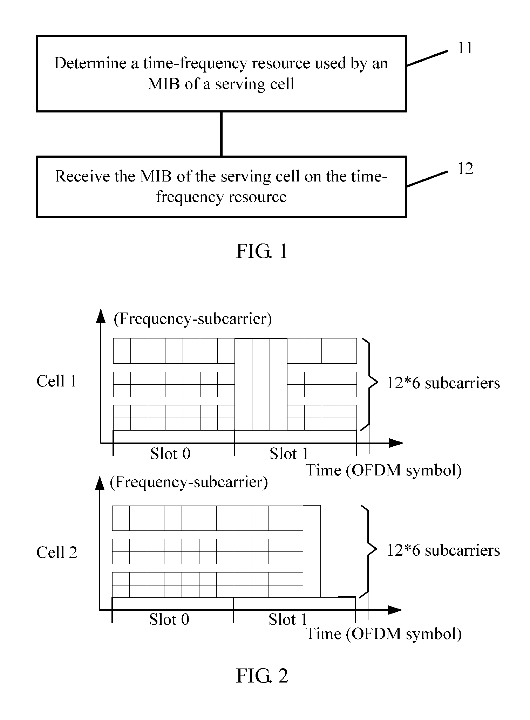

With reference to FIG. 1, the following describes in detail a method for receiving an MIB on a UE side according to an embodiment of the present invention. The method includes the following steps:

Step 11: A UE determines a time-frequency resource used by an MIB of a serving cell, where the time-frequency resource used by the MIB of the serving cell is different from a time-frequency resource used by an MIB of a neighboring cell.

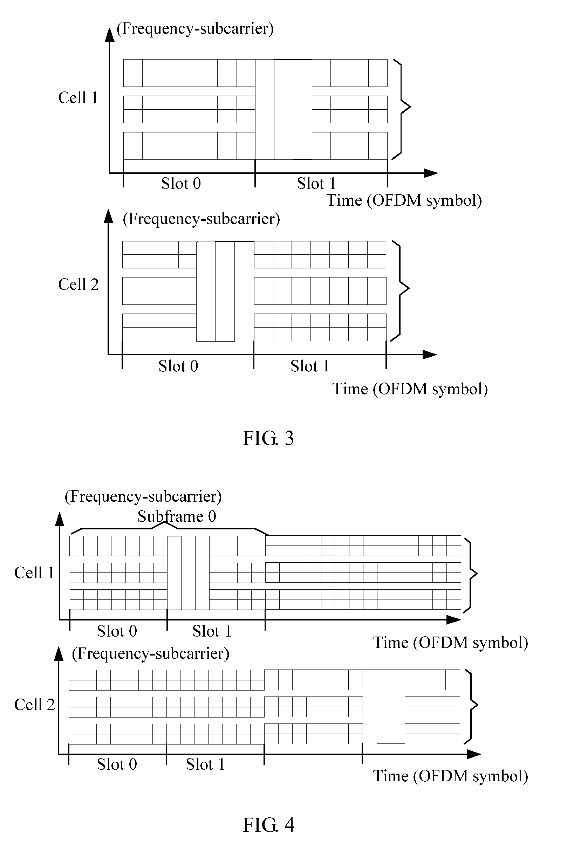

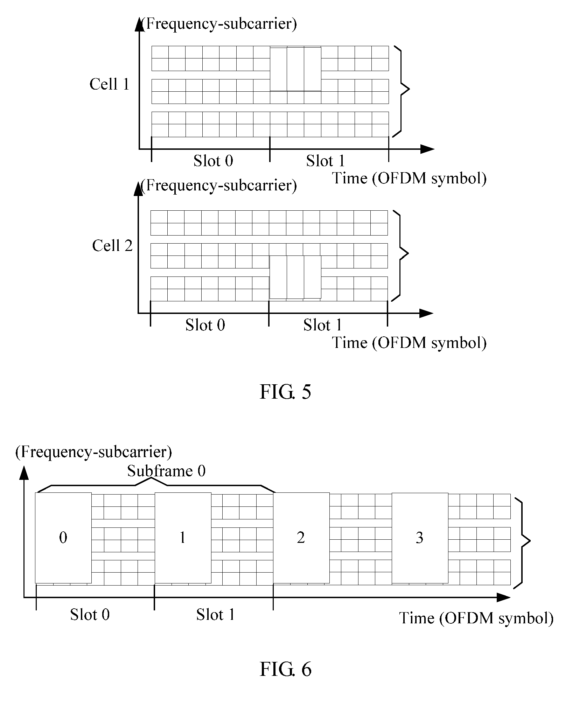

MIBs of different cells are carried on different time-frequency resources, and therefore, interference between the MIBs of different cells is reduced or avoided. Typically, the MIBs of different cells are made to use time-domain resources and/or frequency-domain resources that are staggered from each other. FIG. 2 to FIG. 5 give several examples in which MIBs are staggered in time-frequency resources. In an example of FIG. 2, MIBs are staggered within a same slot (slot) in the time domain. In an example of FIG. 3, MIBs are staggered within a same subframe in the time domain. In an example of FIG. 4, MIBs are staggered between subframes in the time domain. In an example of FIG. 5, MIBs are staggered in the frequency domain. With reference to the examples shown in FIG. 2 to FIG. 5, time in a same Slot, time in a same subframe, different subframe numbers, or different PRB frequency-domain positions may be specified in advance by means of a protocol.

Specifically, the UE may determine, in the following manners, the time-frequency resource used by the MIB of the serving cell in which the UE is located. For example, the UE may determine, according to a detected PSS or SSS of the serving cell, a different time-frequency resource used by the MIB of the serving cell; or for example, the UE may acquire a PCI of the serving cell according to a detected PSS and a detected SSS of a different cell, and then determine, according to the PCI of the serving cell, the time-frequency resource used by the MIB of the serving cell; or for example, the UE may further determine, according to a detected PCFICH of the serving cell, a different time-frequency resource used by the MIB of the serving cell.

For example, a position of the time-frequency resource used by the MIB of the serving cell in which the UE is located may be a function of the PSS, SSS, or PCI. For example, first, a numerical value N is determined, where the numerical value N is an integer greater than 1, and a maximum value of N is limited to a total quantity of the foregoing time-frequency resources and a size of a time-frequency resource occupied by each MIB. The numerical value N may also be specified in a protocol as, for example, 1, 2, 3, 4, 5, or 6. Then, by using the PSS, SSS, or PCI modulo the numerical value N, the position of the time-frequency resource corresponding to the result of the modulo operation and used by the MIB of the serving cell is determined. It may be understood that, when the numerical value N is 1, the position of the time-frequency resource used by the MIB is equivalent to being fixed, that is, MIBs of different cells use a same time-frequency resource.

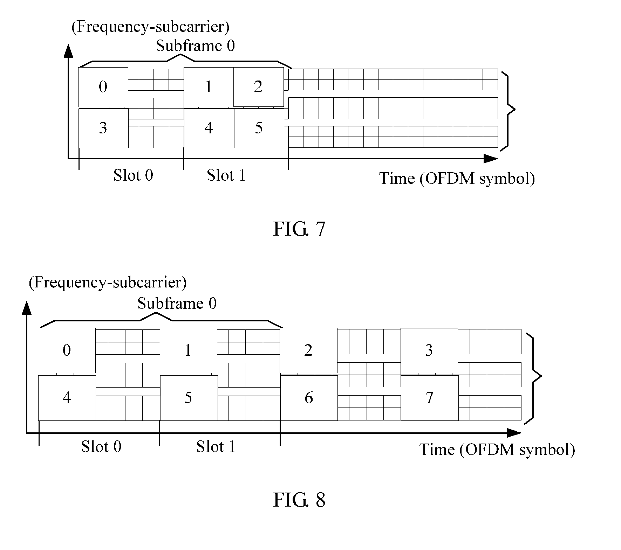

Further, in order to better determine the position of the time-frequency resource used by the MIB, different time-frequency resources that may be occupied by the MIB may be numbered in advance, and the numbers may also be specified in the protocol. FIG. 6 shows a case in which a value of the numerical value N is 4. It is assumed that there are four cells in a system, and in order to avoid interference when the four cells transmit MIBs, a PSS, SSS, or PCI of each cell modulo 4 may be performed. If results of the PSSs, SSSs, or PCIs of the 4 cells modulo 4 are respectively 0, 1, 2, and 3, the four cells respectively use, according to the results of the modulo operations, time-domain resources of corresponding numbers (numbers are respectively 0, 1, 2, and 3 shown in FIG. 6) to transmit MIBs. Therefore, the UE determines, according to the results of the modulo operations, which time-frequency resources to receive the MIBs. Similarly, FIG. 7 and FIG. 8 schematically show another two examples in which time-frequency resources are numbered. Therefore, the MIBs of different cells may perform selection on several positions, shown in the diagrams, of time-frequency resources that may be used by an MIB. By using different time-frequency resources to transmit the MIBs, interference may be effectively reduced or avoided. Therefore, the UE may determine, according to a number (the number may be a function of the foregoing primary synchronization sequence PSS, secondary synchronization sequence SSS, or PCI, and details are not described herein again), which time-frequency resource to be used to receive the MIB.

Step 12: The UE receives the MIB of the serving cell on the determined time-frequency resource.

After determining, by using a manner in step 11, the time-frequency resource used by the MIB of the serving cell in which the UE is located, the UE receives, on the time-frequency resource, the MIB of the serving cell in which the UE is located.

As described in the foregoing, MIBs of different cells are carried on different time-frequency resources, and therefore, interference between the MIBs of different cells is reduced or avoided, thereby improving MIB transmission quality of a serving cell in which a UE is located, and enhancing system performance.

Further, a size of an MIB may be reduced. For example, an MIB generally includes downlink bandwidth information, PHICH information, and SFN information. Therefore, it is considered that an MIB is made to no longer carry downlink bandwidth information or PHICH information, but to carry only SFN information, so downlink bandwidth information and PHICH information may be carried in subsequent SI; or, for example, it is considered that an MIB is made to no longer include PHICH information, and to include only downlink bandwidth information and SFN information, so PHICH information may be carried in subsequent SI.

Because the size of an MIB is reduced, if the MIB still keeps occupying a physical time-frequency resource of a same size as a physical time-frequency resource occupied by a current MIB, a modulation order or coding rate used may be lower, and in a same channel condition, system reliability can be greatly improved. Content included in an MIB, the size of an MIB, a size of the time-frequency resource occupied by an MIB, or a modulation and coding scheme used for an MIB may be determined in a protocol, so as to facilitate coordination of the position of the time-frequency resource used by the MIB. In addition, because fewer time-frequency resources are occupied, MIBs may be more flexibly coordinated in the time domain or the frequency domain, thereby avoiding interference between MIBs of different cells.

It should be noted that, for an LTE system, because there are multiple choices of system bandwidth, and before receiving the MIB, the UE does not know the system bandwidth of the cell, the MIB can be transmitted only within a range of central six PRBs. Certainly, if minimum bandwidth of an NCT cell subsequently changes, for example, to 20 PRBs, transmission of the MIB may also be accordingly adjusted. For example, the MIB may be transmitted within a range of 20 PRBs instead of being transmitted within the range of six PRBs.

It may be understood that, reducing the size of an MIB does not affect normal communication of the system. A reason is that an EPDCCH occupies only several PRBs, and in this case, the UE may not necessarily learn in advance the entire system bandwidth so as to perform decoding. Therefore, downlink bandwidth information may not be carried in the MIB. However, for a purpose of measurement and scheduling, downlink bandwidth information needs to be carried in the subsequent system information (SI, System Information), such as system information block (SIB, System Information Block) SIB1, and SIB2. In addition, a PHICH also occupies only several PRBs. The PHICH is only meant for a UE that needs an uplink data feedback, and therefore, in an idle (IDLE) state, the UE does not need to receive feedback information in the PHICH. In this way, the PHICH information may be carried in subsequent SI, such as SIB1 and SIB2, and may also be configured by using a dedicated RRC message after the UE enters a connected state.

Further, the MIB may be removed. As described in the foregoing, when only SFN information needs to be carried in the MIB and because the SFN information is used for subsequent reception of paging, system broadcast message SIBs, and the like, it may be considered that the MIB is to be removed and that the SFN information is transmitted in SIB 1.

It is assumed that a current transmission period of SIB1 is 80 ms and a repetition interval is 20 ms. Compared with SFN information being carried in the MIB, the UE can obtain the SFN information at most one radio frame (10 ms) later. A delay of milliseconds (ms) will not have great impact on performance of the UE.

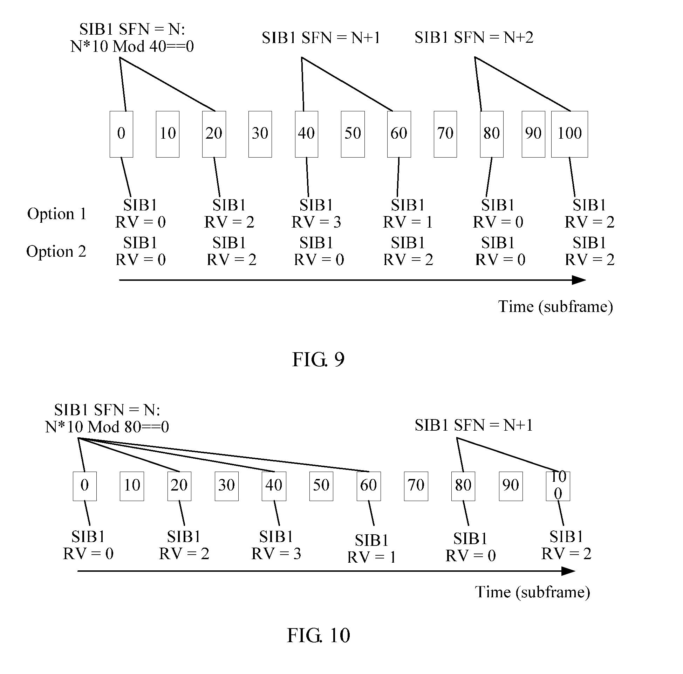

In one optional implementation manner, the SFN information included in the MIB may be information about high-order eight bits that implement an SFN (in an LTE system, the SFN is represented by using 10 bits and is cyclic from 0 to 1023). That is, the SFN information included in the MIB may be represented to a granularity of four radio frames, and low-order two bits are determined according to different redundancy versions imposed on SIB1. The low-order two bits may be combined with the high-order eight bits and represented to a granularity of one radio frame. For example, as shown in FIG. 9, SIB1 needs to be repeated four times within 80 ms, and redundancy versions 0, 2, 3, and 1 may be respectively used, or two of them are used, so as to further determine specific SFN information.

In another optional implementation manner, a redundancy version may further be used to indicate a quantity of antenna ports. For example, 0, 2, 3, and 1 indicate that there is only one antenna port; 0, 2, 1, and 3 indicate that there are two antenna ports; 0, 2, 1, and 1 indicate that there are four antenna ports, and so on, or, the quantity of antenna ports may further be indicated by masking SIB1, and then the UE determines the quantity of antenna ports by unmasking SIB1.

In another optional implementation manner, the SFN information may be high-order seven bits, and low-order three bits are determined according to different redundancy versions imposed on SIB1. For example, as shown in FIG. 10, SIB1 needs to be repeated four times within 80 ms, and redundancy versions 0, 2, 3, and 1 may be respectively used, so as to further determine specific SFN information.

In conclusion, MIBs of different cells are carried on different time-frequency resources, and therefore, interference between the MIBs of different cells is reduced or avoided.

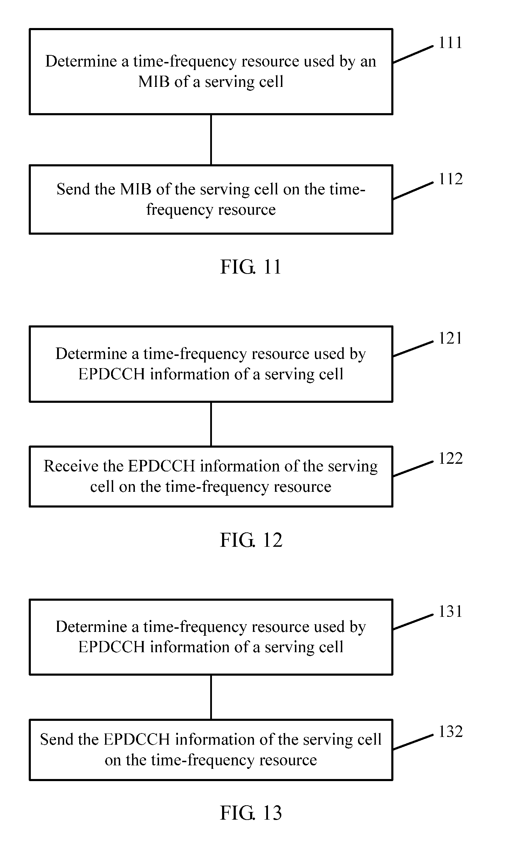

FIG. 11 shows a method for sending an MIB on a base station side according to an embodiment of the present invention. Because the method for sending an MIB on the base station side is corresponding to the method for receiving an MIB on a UE side, repeated content is omitted herein. The method for sending an MIB on the base station side includes the following steps:

Step 111: A base station determines a time-frequency resource used by an MIB of a current serving cell, where the time-frequency resource used by the MIB of the serving cell is different from a time-frequency resource used by an MIB of a neighboring cell.

That is, MIBs of multiple different cells in a network use different time-frequency resources or different frequency-domain resources.

The base station determines, in the following manners, the time-frequency resource used by the MIB of the serving cell. For example, the base may determine, according to a detected PSS or SSS of the serving cell, the time-frequency resource used by the MIB of the serving cell; or, for example, the base station may acquire a PCI of the serving cell according to a detected PSS and a detected SSS of the serving cell, and determine, according to the PCI of the serving cell, the time-frequency resource used by the MIB of the serving cell; or, for example, the base may determine, according to a detected PCFICH of the serving cell, the time-frequency resource used by the MIB of the serving cell.

Further, the base station may determine a numerical value N, where the numerical value N is an integer greater than 1; and then determine, according to a result of the PSS or SSS modulo the numerical value N, the time-frequency resource that is used by the MIB of the serving cell and corresponding to the result.

Alternatively, the base station may determine a numerical value N, where the numerical value N is an integer greater than 1; and then determine, according to a result of the PCI modulo the numerical value N, the time-frequency resource that is used by the MIB of the serving cell and corresponding to the result.

It should be noted that a maximum value of the foregoing N is limited to a total quantity of the foregoing time-frequency resources and a size of a time-frequency resource occupied by each MIB.

Step 112: The base station sends the MIB of the serving cell on the determined time-frequency resource.

After determining the time-frequency resource used by the MIB of the serving cell and before sending the MIB of the serving cell on the time-frequency resource, the base station may further send a PSS and/or an SSS of the serving cell, where the PSS and/or the SSS of the serving cell indicate/indicates the time-frequency resource used by the MIB of the serving cell; or, for example, the base station may send a PCFICH of the serving cell, where the PCFICH of the serving cell indicates the time-frequency resource used by the MIB of the serving cell.

The foregoing MIB may include only SFN information, or include SFN information and downlink bandwidth information.

In conclusion, MIBs of different cells are carried on different time-frequency resources, and therefore, interference between the MIBs of different cells can be effectively reduced or avoided, thereby improving MIB transmission quality, and enhancing system performance.

Generally, the UE needs to receive broadcast messages and paging messages in the serving cell. When initially accessing a network, the UE needs to receive a random access response message. All these messages may need to be scheduled by using an EPDCCH, and the UE needs to receive, in a common search space part of the EPDCCH, scheduling information of the broadcast message, paging message, or random access response message. In addition, when in a connected state, the UE further needs to receive downlink data and send uplink data. Transmission of both the uplink data and the downlink data may need to be scheduled by using the EPDCCH, and the UE may receive, in the common search space part of the EPDCCH or a dedicated search space part of the EPDCCH, scheduling information of the uplink data and the downlink data. In conclusion, the EDPCCH may include a common search space, include a dedicated search space, or include both a common search space and a dedicated search space. Further optionally, more common search spaces or dedicated search spaces may be carried in an SIB, or may be configured by using a dedicated RRC message.

FIG. 12 shows a method for receiving EPDCCH information on a UE side according to an embodiment of the present invention. The method includes the following steps:

Step 121: A UE determines a time-frequency resource used by EPDCCH information of a serving cell, where the time-frequency resource used by the EPDCCH information of the serving cell is different from a time-frequency resource used by EPDCCH information of a neighboring cell.

EPDCCH information of different cells is carried on different time-frequency resources, and therefore, interference between the EPDCCH information of different cells is reduced or avoided. Typically, the EPDCCH information of different cells is made to use time-domain resources and/or frequency-domain resources that are staggered from each other.

For example, the UE may determine, according to a detected PSS or SSS of the serving cell, the time-frequency resource used by the EPDCCH information of the serving cell. PSSs or SSSs of different cells are different, and time-frequency resources used by the EPDCCH information of different cells may be different.

Alternatively, for example, the UE may acquire a PCI of the serving cell according to a detected PSS and a detected SSS of different cells, and determine, according to the PCI of the serving cell, the time-frequency resource used by the EPDCCH information of the serving cell. PCIs of different cells are different, and time-frequency resources used by the EPDCCH information of different cells may be different.

Further, the UE may first determine a numerical value N, where the numerical value N is an integer greater than 1, and a maximum value of N is limited to a total quantity of the foregoing time-frequency resources and a size of a time-frequency resource occupied by each EPDCCH; and then determine, according to a result of the PSS, SSS, or PCI modulo the numerical value N, the time-frequency resource that is used by the EPDCCH information of the serving cell and corresponding to the result.

Alternatively, for example, the UE may determine, according to a detected PCFICH of the serving cell, the time-frequency resource used by the EPDCCH information of the serving cell. Specifically, in order to reduce interference between PCFICHs of different cells, a position of the PCFICH may be determined according to a quantity of antenna ports of a system. PCFICHs of different cells are different, and time-frequency resources used by the EPDCCH information of different cells may be different.

Alternatively, for example, the UE may further determine, according to a received MIB of the serving cell, the time-frequency resource used by the EPDCCH information of the serving cell. For example, a position of an EPDCCH may be determined according to a position of the MIB. Specifically, the EPDCCH information may occupy a same PRB as the MIB, and the EPDCCH information is transmitted in a non-MIB transmission area on a corresponding PRB. For example, the position of the EPDCCH information may be determined according to the position of the MIB and/or a quantity of antenna ports of a system. Specifically, the UE learns a quantity of antenna ports of a current serving cell by using the MIB, and the quantity of antenna ports may be mapped to different offsets of the EPDCCH information in the time or frequency domain. For example, it is assumed that positions of MIBs of different cells are the same, a quantity of antenna ports of a cell is 1, and a quantity of antenna ports of another cell is 2, positions of EPDCCH information that are corresponding to these two cells need to be staggered. Positions of time-frequency resources used by the MIBs of different cells and/or the quantities of antenna ports in the system of different cells are different, and time-frequency resources used by the EPDCCH information of different cells may be different.

It should be noted that, in order to reduce interference between the EPDCCH information, it is avoided, as much as possible, that all cells occupy fixed time-frequency resources. However, because the MIB may carry no downlink bandwidth information, EPDCCH information can be transmitted only within a range of central six PRBs. Certainly, if minimum bandwidth of an NCT cell subsequently changes, for example, to 20 PRBs, a transmission range of the EDPCCH information may also be accordingly adjusted. For example, the EPDCCH information may be transmitted within a range of 20 PRBs instead of being transmitted within the range of six PRBs. Optionally, if system bandwidth is broadcast in the MIB, the EPDCCH information may not be limited to being transmitted within six PRBs, but is transmitted according to a position, calculated according to full bandwidth, of the time-frequency resource used by the EPDCCH information and.

Step 122: The UE receives the EPDCCH information of the serving cell on the time-frequency resource.

Generally, the EDPCCH information may occupy a PRB group that consists of one or more PRBs. Therefore, that the EPDCCH information of different cells is staggered in the time domain generally means being staggered between subframes, and that the EPDCCH information of different cells is staggered in the frequency domain generally means being staggered between different PRBs or PRB groups. Staggering may be performed according to a mapping table specified in advance in a protocol or a specific rule specified in the protocol, such as an equal frequency or time interval, or a variable frequency or time interval.

When there is an EMBMS service, EMBMS subframes exist. In a case in which EMBMS subframes exist, the EPDCCH information may also occupy specific bandwidth. The foregoing method is still used when the UE needs to receive the EPDCCH information in an IDLE state, that is, the transmission of the EDPCCH information is optimized in the EMBMS subframe according to a specific rule.

In conclusion, EPDCCH information of different cells is carried on different time-frequency resources, and therefore, interference between the EPDCCH information of different cells can be effectively reduced or avoided, thereby improving EPDCCH information transmission quality, and enhancing system performance.

FIG. 13 shows a method for sending EPDCCH information on a base station side according to an embodiment of the present invention. Because the method for sending EPDCCH information on the base station side is corresponding to the method for receiving EPDCCH information on a UE side, repeated content is omitted herein. The method for sending EPDCCH information on the base station side includes the following steps:

Step 131: A base station determines a time-frequency resource used by EPDCCH information of a current serving cell, where the time-frequency resource used by the EPDCCH information of the serving cell is different from a time-frequency resource used by EPDCCH information of a neighboring cell.

Specifically, the base station may determine, according to a detected PSS or of the serving cell, the time-frequency resource used by the EPDCCH information of the serving cell; or acquire a PCI of the serving cell according to a detected PSS and a detected SSS of the serving cell, and determine, according to the PCI of the serving cell, the time-frequency resource used by the EPDCCH information of the serving cell; or determine, according to a detected PCFICH of the serving cell, the time-frequency resource used by the EPDCCH information of the serving cell.

The base station may further determine a numerical value N, where the numerical value N is an integer greater than 1, and a maximum value of N is limited to a total quantity of the foregoing time-frequency resources and a size of a time-frequency resource occupied by each EPDCCH; and then determine, according to a result of the PSS, SSS, or PCI modulo the numerical value N, the time-frequency resource that is used by the EPDCCH information of the serving cell and corresponding to the result.

Optionally, the base station may further determine, according to a sent MIB of the serving cell, the time-frequency resource used by the EPDCCH information of the serving cell, and a method for sending an MIB of the serving cell is shown in FIG. 11.

Step 132: The base station sends the EPDCCH information of the serving cell on the determined time-frequency resource.

In addition, after determining the time-frequency resource used by the PDCCH information of the serving cell and before sending the EPDCCH information of the serving cell on the time-frequency resource, the base station may further send a PSS and/or an SSS of the serving cell, where the PSS and/or the SSS of the serving cell indicate/indicates the time-frequency resource used by the EPDCCH information of the serving cell; or the base station sends a PCFICH of the serving cell, where the PCFICH of the serving cell indicates the time-frequency resource used by the EPDCCH information of the serving cell.

Optionally, after determining the time-frequency resource used by the PDCCH information of the serving cell and before sending the EPDCCH information of the serving cell on the time-frequency resource, the base station may further send an MIB of the cell, where a time-frequency resource of the MIB of the serving cell is associated with the time-frequency resource used by the EPDCCH information of the serving cell.

In conclusion, EPDCCH information of different cells is carried on different time-frequency resources, and therefore, interference between the EPDCCH information of different cells can be effectively reduced or avoided, thereby improving EPDCCH information transmission quality, and enhancing system performance.

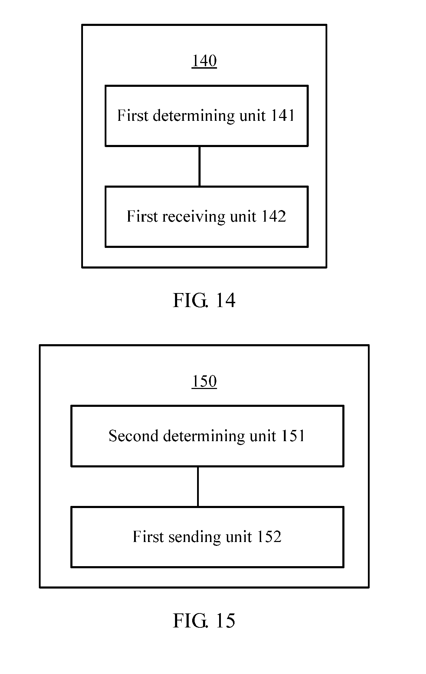

With reference to FIG. 14 and FIG. 15, the following describes an apparatus for transmitting an MIB according to an embodiment of the present invention.

In FIG. 14, an apparatus 140 for transmitting an MIB includes a first determining unit 141 and a first receiving unit 142. The first determining unit 141 is configured to determine a time-frequency resource used by an MIB of a serving cell, where the time-frequency resource used by the MIB of the serving cell is different from a time-frequency resource used by an MIB of a neighboring cell. The first receiving unit 142 is configured to receive the MIB of the serving cell on the time-frequency resource.

Further, the first determining unit 141 may determine, according to a detected PSS or SSS of the serving cell, the time-frequency resource used by the MIB of the serving cell.

For example, the first determining unit 141 may first determine a numerical value N, where the numerical value N is an integer greater than 1; and then determine, according to a result of the PSS or SSS modulo the numerical value N, the time-frequency resource that is used by the MIB of the serving cell and corresponding to the result.

Optionally, the first determining unit 141 may acquire a PCI of the serving cell according to a detected PSS and a detected SSS of the serving cell, and determine, according to the PCI of the serving cell, the time-frequency resource used by the MIB of the serving cell.

For example, the first determining unit 141 may first determine a numerical value N, where the numerical value N is an integer greater than 1; and then determine, according to a result of the PCI modulo the numerical value N, the time-frequency resource that is used by the MIB of the serving cell and corresponding to the result.

It should be noted that, a maximum value of the foregoing N is limited to a total quantity of the foregoing time-frequency resources and a size of a time-frequency resource occupied by each MIB.

Optionally, the first determining unit 141 may determine, according to a detected PCFICH of the serving cell, the time-frequency resource used by the MIB of the serving cell.

The foregoing MIB may include only SFN information, or include only SFN information and downlink bandwidth information.

In conclusion, MIBs of different cells are carried on different time-frequency resources, and therefore, interference between the MIBs of different cells can be effectively reduced or avoided, thereby improving MIB transmission quality, and enhancing system performance.

In FIG. 15, an apparatus 150 for transmitting an MIB includes a second determining unit 151 and a first sending unit 152. The second determining unit 151 is configured to determine a time-frequency resource used by an MIB of a serving cell, where the time-frequency resource used by the MIB of the serving cell is different from a time-frequency resource used by an MIB of a neighboring cell. The first sending unit 152 is configured to send the MIB of the serving cell on the time-frequency resource.

Further, the second determining unit 151 may determine, according to a detected PSS or SSS of the serving cell, the time-frequency resource used by the MIB of the serving cell.

For example, the second determining unit 151 may first determine a numerical value N, where the numerical value N is an integer greater than 1; and then determine, according to a result of the PSS or SSS modulo the numerical value N, the time-frequency resource that is used by the MIB of the serving cell and corresponding to the result.

Optionally, the second determining unit 151 may acquire a PCI of the serving cell according to a detected PSS and a detected SSS of the serving cell, and determine, according to the PCI of the serving cell, the time-frequency resource used by the MIB of the serving cell.

For example, the second determining unit 151 may first determine a numerical value N, where the numerical value N is an integer greater than 1; and then determine, according to a result of the PCI modulo the numerical value N, the time-frequency resource that is used by the MIB of the serving cell and corresponding to the result.

Optionally, the second determining unit 151 may determine, according to a detected PCFICH of the serving cell, the time-frequency resource used by the MIB of the serving cell.

The foregoing MIB may include only SFN information, or include only SFN information and downlink bandwidth information. A maximum value of the foregoing N is limited to a total quantity of the foregoing time-frequency resources and a size of a time-frequency resource occupied by each MIB.

In conclusion, MIBs of different cells are carried on different time-frequency resources, and therefore, interference between the MIBs of different cells can be effectively reduced or avoided, thereby improving MIB transmission quality, and enhancing system performance.

It may be understood that, the apparatus 140 for transmitting an MIB may be configured in a UE, and the apparatus 150 for transmitting an MIB may be configured in a base station.

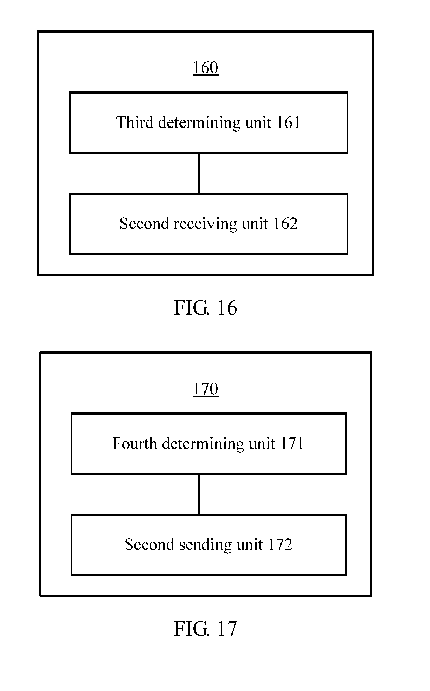

With reference to FIG. 16 and FIG. 17, the following describes an apparatus for transmitting EPDCCH information according to an embodiment of the present invention.

In FIG. 16, an apparatus 160 for transmitting EPDCCH information includes a third determining unit 161 and a second receiving unit 162. The third determining unit 161 is configured to determine a time-frequency resource used by EPDCCH information of a serving cell, where the time-frequency resource used by the EPDCCH information of the serving cell is different from a time-frequency resource used by EPDCCH information of a neighboring cell. The second receiving unit 162 is configured to receive the EPDCCH information of the serving cell on the time-frequency resource.

Further, the third determining unit 161 may determine, according to a detected PSS or SSS of the serving cell, the time-frequency resource used by the EPDCCH information of the serving cell.

For example, the third determining unit 161 may first determine a numerical value N, where the numerical value N is an integer greater than 1; and then determine, according to a result of the PSS or SSS modulo the numerical value N, the time-frequency resource that is used by the EPDCCH information of the serving cell and corresponding to the result.

Optionally, the third determining unit 161 may acquire a PCI of the serving cell according to a detected PSS and a detected SSS of the serving cell, and determine, according to the PCI of the serving cell, the time-frequency resource used by the EPDCCH information of the serving cell.

For example, the third determining unit 161 may first determine a numerical value N, where the numerical value N is an integer greater than 1; and then determine, according to a result of the PCI modulo the numerical value N, the time-frequency resource that is used by the EPDCCH information of the serving cell and corresponding to the result.

It should be noted that a maximum value of the foregoing N is limited to a total quantity of the foregoing time-frequency resources and a size of a time-frequency resource occupied by each EPDCCH.

Optionally, the third determining unit 161 may determine, according to a detected PCFICH of the serving cell, the time-frequency resource used by the EPDCCH information of the serving cell.

Optionally, the third determining unit 161 may determine, according to a received MIB of the serving cell, the time-frequency resource used by the EPDCCH information of the serving cell.

In conclusion, EPDCCH information of different cells is carried on different time-frequency resources, and therefore, interference between the EPDCCH information of different cells can be effectively reduced or avoided, thereby improving EPDCCH information transmission quality, and enhancing system performance.

In FIG. 17, an apparatus 170 for transmitting EPDCCH information includes a fourth determining unit 171 and a second sending unit 172. The fourth determining unit 171 is configured to determine a time-frequency resource used by EPDCCH information of a serving cell, where the time-frequency resource used by the EPDCCH information of the serving cell is different from a time-frequency resource used by EPDCCH information of a neighboring cell. The second sending unit 172 is configured to send the EPDCCH information of the serving cell on the time-frequency resource.

Further, the fourth determining unit 171 may determine, according to a detected PSS or SSS of the serving cell, the time-frequency resource used by the EPDCCH information of the serving cell.

For example, the fourth determining unit 171 may first determine a numerical value N, where the numerical value N is an integer greater than 1; and then determine, according to a result of the PSS or SSS modulo the numerical value N, the time-frequency resource that is used by the EPDCCH information of the serving cell and corresponding to the result.

Optionally, the fourth determining unit 171 may acquire a PCI of the serving cell according to a detected PSS and a detected SSS of the serving cell, and determine, according to the PCI of the serving cell, the time-frequency resource used by the EPDCCH information of the serving cell.

For example, the fourth determining unit 171 may first determine a numerical value N, where the numerical value N is an integer greater than 1; and then determine, according to a result of the PCI modulo the numerical value N, the time-frequency resource that is used by the EPDCCH information of the serving cell and corresponding to the result.

It should be noted that, a maximum value of the foregoing N is limited to a total quantity of the foregoing time-frequency resources and a size of a time-frequency resource occupied by each EPDCCH.

Optionally, the fourth determining unit 171 may determine, according to a detected PCFICH of the serving cell, the time-frequency resource used by the EPDCCH information of the serving cell.

Optionally, the fourth determining unit 171 may determine, according to a sent MIB of the serving cell, the time-frequency resource used by the EPDCCH information of the serving cell.

In conclusion, EPDCCH information of different cells is carried on different time-frequency resources, and therefore, interference between the EPDCCH information of different cells can be effectively reduced or avoided, thereby improving EPDCCH information transmission quality, and enhancing system performance.

It may be understood that the apparatus 160 for transmitting EPDCCH information may be configured in a UE, and the apparatus 170 for transmitting EPDCCH information may be configured in a base station.

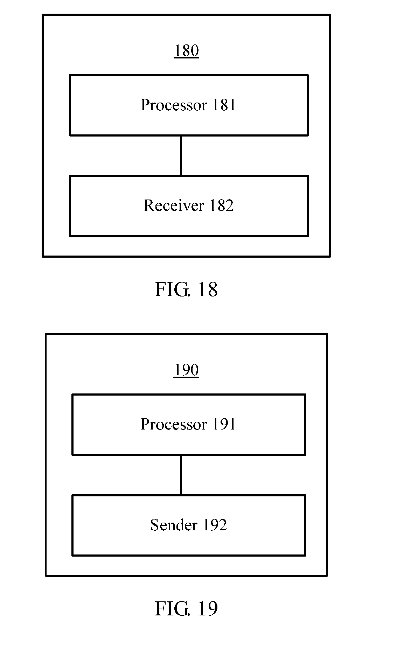

The following FIG. 18 and FIG. 19 respectively show a UE and a base station.

In FIG. 18, a UE 180 includes a processor 181 and a receiver 182. The processor 181 is configured to determine a time-frequency resource used by an MIB or EPDCCH information of a serving cell, where the time-frequency resource used by the MIB or EPDCCH information of the serving cell is different from a time-frequency resource used by an MIB or EPDCCH information of a neighboring cell. The receiver 182 is configured to receive the MIB or EPDCCH information of the serving cell on the time-frequency resource.

The processor 181 may execute, with reference to the first determining unit 141 in FIG. 14, the determining of the time-frequency resource used by the MIB of the serving cell, where the time-frequency resource used by the MIB of the serving cell is different from the time-frequency resource used by the MIB of the neighboring cell.

Specifically, the processor 181 may determine, according to a detected primary synchronization signal PSS or secondary synchronization signal SSS of the serving cell, the time-frequency resource used by the MIB of the serving cell; or acquire a physical cell identifier PCI of the serving cell according to a detected PSS and a detected SSS of the serving cell, and determine, according to the PCI of the serving cell, the time-frequency resource used by the MIB of the serving cell; or determine, according to a detected physical control format indicator channel PCFICH of the serving cell, the time-frequency resource used by the MIB of the serving cell.

Optionally, the processor 181 may execute, with reference to the third determining unit 161 in FIG. 16, the determining of the time-frequency resource used by the EPDCCH information of the serving cell, where the time-frequency resource used by the EPDCCH information of the serving cell is different from the time-frequency resource used by the EPDCCH information of the neighboring cell.

Specifically, the processor 181 may determine, according to a detected primary synchronization signal PSS or secondary synchronization signal SSS of the serving cell, the time-frequency resource used by the EPDCCH information of the serving cell; or acquire a physical cell identifier PCI of the serving cell according to a detected PSS and a detected SSS of the serving cell, and determine, according to the PCI of the serving cell, the time-frequency resource used by the EPDCCH information of the serving cell; or determine, according to a detected physical control format indicator channel PCFICH of the serving cell, the time-frequency resource used by the EPDCCH information of the serving cell; or determine, according to a received MIB of the serving cell, the time-frequency resource used by the EPDCCH information of the serving cell.

The receiver 182 may execute, with reference to the first receiving unit 142 in FIG. 14, the receiving of the MIB of the serving cell on the time-frequency resource.

Optionally, the receiver 182 may execute, with reference to the second receiving unit 162 in FIG. 16, the receiving of the EPDCCH information of the serving cell on the time-frequency resource.

In FIG. 19, a base station 190 includes a processor 191 and a transmitter 192. The processor 191 is configured to determine a time-frequency resource used by an MIB or EPDCCH information of a serving cell, where the time-frequency resource used by the MIB or EPDCCH information of the serving cell is different from a time-frequency resource used by an MIB or EPDCCH information of a neighboring cell. The transmitter 192 is configured to send the MIB or EPDCCH information of the serving cell on the time-frequency resource.

The processor 191 may execute, with reference to the second determining unit 151 in FIG. 15, the determining of the time-frequency resource used by the MIB of the serving cell, where the time-frequency resource used by the MIB of the serving cell is different from the time-frequency resource used by the MIB of the neighboring cell.

Specifically, the processor 191 may determine, according to a detected primary synchronization signal PSS or secondary synchronization signal SSS of the serving cell, the time-frequency resource used by the MIB of the serving cell; or acquire a physical cell identifier PCI of the serving cell according to a detected PSS and a detected SSS of the serving cell, and determine, according to the PCI of the serving cell, the time-frequency resource used by the MIB of the serving cell; or determine, according to a detected physical control format indicator channel PCFICH of the serving cell, the time-frequency resource used by the MIB of the serving cell.

Optionally, the processor 191 may execute, with reference to the fourth determining unit 171 in FIG. 17, the determining of the time-frequency resource used by the EPDCCH information of the serving cell, where the time-frequency resource used by the EPDCCH information of the serving cell is different from the time-frequency resource used by the EPDCCH information of the neighboring cell.

Specifically, the processor 191 may determine, according to a detected primary synchronization signal PSS or secondary synchronization signal SSS of the serving cell, the time-frequency resource used by the EPDCCH information of the serving cell; or acquire a physical cell identifier PCI of the serving cell according to a detected PSS and a detected SSS of the serving cell, and determine, according to the PCI of the serving cell, the time-frequency resource used by the EPDCCH information of the serving cell; or determine, according to a detected physical control format indicator channel PCFICH of the serving cell, the time-frequency resource used by the EPDCCH information of the serving cell; or determine, according to a sent MIB of the serving cell, the time-frequency resource used by the EPDCCH information of the serving cell.

The transmitter 192 may execute, with reference to the first sending unit 152 in FIG. 15, the sending of the MIB of the serving cell on the time-frequency resource.

Optionally, the transmitter 192 may execute, with reference to the second sending unit 172 in FIG. 17, the sending of the EPDCCH information of the serving cell on the time-frequency resource.

In conclusion, MIBs or EPDCCH information of different cells is/are carried on different time-frequency resources, and therefore, interference between the MIBs or EPDCCH information of different cells can be effectively reduced or avoided, thereby improving MIB or EPDCCH information transmission quality, and enhancing system performance.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that the solution described in each claim of the present invention should be considered as an embodiment, and characteristics in claims may be combined. The steps of different branches performed after the determining steps of the present invention, for example, may be regarded as different embodiments.

A person of ordinary skill in the art may be aware that, the exemplary units and algorithm steps described with reference to the embodiments disclosed in the specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, and are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information transmission method, comprising:
determining a time-frequency resource used by a master information block MIB of a serving cell, wherein the time-frequency resource used by the MIB of the serving cell is different from a time-frequency resource used by an MIB of a neighboring cell; and
receiving the MIB of the serving cell on the time-frequency resource.

2. The method according to claim 1, wherein the determining a time-frequency resource used by an MIB of a serving cell comprises:
determining, according to a detected primary synchronization signal PSS or secondary synchronization signal SSS of the serving cell, the time-frequency resource used by the MIB of the serving cell; or
acquiring a physical cell identifier PCI of the serving cell according to a detected PSS and a detected SSS of the serving cell, and determining, according to the PCI of the serving cell, the time-frequency resource used by the MIB of the serving cell; or
determining, according to a detected physical control format indicator channel PCFICH of the serving cell, the time-frequency resource used by the MIB of the serving cell.

3. The method according to claim 2, wherein the determining, according to a detected PSS or SSS of the serving cell, the time-frequency resource used by the MIB of the serving cell comprises:
determining a numerical value N, wherein the numerical value N is an integer greater than 1; and
determining, according to a result of the PSS or SSS modulo the numerical value N, the time-frequency resource that is used by the MIB of the serving cell and corresponding to the result.

4. The method according to claim 2, wherein the determining, according to the PCI of the serving cell, the time-frequency resource used by the MIB of the serving cell comprises:
determining a numerical value N, wherein the numerical value N is an integer greater than 1; and
determining, according to a result of the PCI modulo the numerical value N, the time-frequency resource that is used by the MIB of the serving cell and corresponding to the result.

5. The method according to any one of claims 1 to 4, wherein the MIB comprises system frame number information, or system frame number information and downlink bandwidth information.

6. An information transmission method, comprising:
determining a time-frequency resource used by a master information block MIB of a serving cell, wherein the time-frequency resource used by the MIB of the serving cell is different from a time-frequency resource used by an MIB of a neighboring cell; and
sending the MIB of the serving cell on the time-frequency resource.

7. The method according to claim 6, wherein the determining a time-frequency resource used by an MIB of a serving cell comprises:
determining, according to a detected primary synchronization signal PSS or secondary synchronization signal SSS of the serving cell, the time-frequency resource used by the MIB of the serving cell; or
acquiring a physical cell identifier PCI of the serving cell according to a detected PSS and a detected SSS of the serving cell, and determining, according to the PCI of the serving cell, the time-frequency resource used by the MIB of the serving cell; or
determining, according to a detected physical control format indicator channel PCFICH of the serving cell, the time-frequency resource used by the MIB of the serving cell.

8. The method according to claim 7, wherein the determining, according to a detected PSS or SSS of the serving cell, the time-frequency resource used by the MIB of the serving cell comprises:
determining a numerical value N, wherein the numerical value N is an integer greater than 1; and
determining, according to a result of the PSS or SSS modulo the numerical value N, the time-frequency resource that is used by the MIB of the serving cell and corresponding to the result.

9. The method according to claim 7, wherein the determining, according to the PCI of the serving cell, the time-frequency resource used by the MIB of the serving cell comprises:
determining a numerical value N, wherein the numerical value N is an integer greater than 1; and
determining, according to a result of the PCI modulo the numerical value N, the time-frequency resource that is used by the MIB of the serving cell and corresponding to the result.

10. The method according to any one of claims 6 to 9, wherein the MIB comprises system frame number information, or system frame number information and downlink bandwidth information.

11. An information transmission method, comprising:
determining a time-frequency resource used by enhanced physical downlink control channel EPDCCH information of a serving cell, wherein the time-frequency resource used by the EPDCCH information of the serving cell is different from a time-frequency resource used by EPDCCH information of a neighboring cell; and
receiving the EPDCCH information of the serving cell on the time-frequency resource.

12. The method according to claim 11, wherein the determining a time-frequency resource used by EPDCCH information of a serving cell comprises:
determining, according to a detected primary synchronization signal PSS or secondary synchronization signal SSS of the serving cell, the time-frequency resource used by the EPDCCH information of the serving cell; or
acquiring a physical cell identifier PCI of the serving cell according to a detected PSS and a detected SSS of the serving cell, and determining, according to the PCI of the serving cell, the time-frequency resource used by the EPDCCH information of the serving cell; or
determining, according to a detected physical control format indicator channel PCFICH of the serving cell, the time-frequency resource used by the EPDCCH information of the serving cell.

13. The method according to claim 12, wherein the determining, according to a detected PSS or SSS of the serving cell, the time-frequency resource used by the EPDCCH information of the serving cell comprises:
determining a numerical value N, wherein the numerical value N is an integer greater than 1; and
determining, according to a result of the PSS or SSS modulo the numerical value N, the time-frequency resource that is used by the EPDCCH information of the serving cell and corresponding to the result.

14. The method according to claim 12, wherein the determining, according to the PCI of the serving cell, the time-frequency resource used by the EPDCCH information of the serving cell comprises:
determining a numerical value N, wherein the numerical value N is an integer greater than 1; and
determining, according to a result of the PCI modulo the numerical value N, the time-frequency resource that is used by the EPDCCH information of the serving cell and corresponding to the result.

15. The method according to claim 11, wherein the determining a time-frequency resource used by EPDCCH information of a serving cell comprises:
determining, according to a received master information block MIB of the serving cell, the time-frequency resource used by the EPDCCH information of the serving cell, wherein a method for receiving the MIB of the serving cell is according to any one of claims 1 to 5.

16. An information transmission method, comprising:
determining a time-frequency resource used by enhanced physical downlink control channel EPDCCH information of a serving cell, wherein the time-frequency resource used by the EPDCCH information of the serving cell is different from a time-frequency resource used by EPDCCH information of a neighboring cell; and
sending the EPDCCH information of the serving cell on the time-frequency resource.

17. The method according to claim 16, wherein the determining a time-frequency resource used by EPDCCH information of a serving cell comprises:
determining, according to a detected primary synchronization signal PSS or secondary synchronization signal SSS of the serving cell, the time-frequency resource used by the EPDCCH information of the serving cell; or
acquiring a physical cell identifier PCI of the serving cell according to a detected PSS and a detected SSS of the serving cell, and determining, according to the PCI of the serving cell, the time-frequency resource used by the EPDCCH information of the serving cell; or
determining, according to a detected physical control format indicator channel PCFICH of the serving cell, the time-frequency resource used by the EPDCCH information of the serving cell.

18. The method according to claim 17, wherein the determining, according to a detected PSS or SSS of the serving cell, the time-frequency resource used by the EPDCCH information of the serving cell comprises:
determining a numerical value N, wherein the numerical value N is an integer greater than 1; and
determining, according to a result of the PSS or SSS modulo the numerical value N, the time-frequency resource that is used by the EPDCCH information of the serving cell and corresponding to the result.

19. The method according to claim 17, wherein the determining, according to the PCI of the serving cell, the time-frequency resource used by the EPDCCH information of the serving cell comprises:
determining a numerical value N, wherein the numerical value N is an integer greater than 1; and
determining, according to a result of the PCI modulo the numerical value N, the time-frequency resource that is used by the EPDCCH information of the serving cell and corresponding to the result.

20. The method according to claim 16, wherein the determining a time-frequency resource used by EPDCCH information of a serving cell comprises:
determining, according to a sent master information block MIB of the serving cell, the time-frequency resource used by the EPDCCH information of the serving cell, wherein a method for sending the MIB of the serving cell is according to any one of claims 6 to 10.

21. An information transmission apparatus, comprising:
a first determining unit, configured to determine a time-frequency resource used by a master information block MIB of a serving cell, wherein the time-frequency resource used by the MIB of the serving cell is different from a time-frequency resource used by an MIB of a neighboring cell; and
a first receiving unit, configured to receive the MIB of the serving cell on the time-frequency resource determined by the first determining unit.

22. The apparatus according to claim 21, wherein the first determining unit is configured to:
determine, according to a detected primary synchronization signal PSS or secondary synchronization signal SSS of the serving cell, the time-frequency resource used by the MIB of the serving cell; or
acquire a physical cell identifier PCI of the serving cell according to a detected PSS and a detected SSS of the serving cell, and determine, according to the PCI of the serving cell, the time-frequency resource used by the MIB of the serving cell; or
determine, according to a detected physical control format indicator channel PCFICH of the serving cell, the time-frequency resource used by the MIB of the serving cell.

23. The apparatus according to claim 22, wherein the first determining unit is specifically configured to:
determine a numerical value N, wherein the numerical value N is an integer greater than 1; and
determine, according to a result of the PSS, SSS, or PCI modulo the numerical value N, the time-frequency resource that is used by the MIB of the serving cell and corresponding to the result.

24. The apparatus according to any one of claims 21 to 23, wherein the MIB comprises system frame number information, or system frame number information and downlink bandwidth information.

25. An information transmission apparatus, comprising:
a second determining unit, configured to determine a time-frequency resource used by a master information block MIB of a serving cell, wherein the time-frequency resource used by the MIB of the serving cell is different from a time-frequency resource used by an MIB of a neighboring cell; and
a first sending unit, configured to send the MIB of the serving cell on the time-frequency resource determined by the second determining unit.

26. The apparatus according to claim 25, wherein the second determining unit is configured to:
determine, according to a detected primary synchronization signal PSS or secondary synchronization signal SSS of the serving cell, the time-frequency resource used by the MIB of the serving cell; or
acquire a physical cell identifier PCI of the serving cell according to a detected PSS and a detected SSS of the serving cell, and determine, according to the PCI of the serving cell, the time-frequency resource used by the MIB of the serving cell; or
determine, according to a detected physical control format indicator channel PCFICH of the serving cell, the time-frequency resource used by the MIB of the serving cell.

27. The apparatus according to claim 26, wherein the second determining unit is specifically configured to:
determine a numerical value N, wherein the numerical value N is an integer greater than 1; and
determine, according to a result of the PSS, SSS, or PCI modulo the numerical value N, the time-frequency resource that is used by the MIB of the serving cell and corresponding to the result.

28. The apparatus according to any one of claims 25 to 27, wherein the MIB comprises system frame number information, or system frame number information and downlink bandwidth information.

29. An information transmission apparatus, comprising:
a third determining unit, configured to determine a time-frequency resource used by enhanced physical downlink control channel EPDCCH information of a serving cell, wherein the time-frequency resource used by the EPDCCH information of the serving cell is different from a time-frequency resource used by EPDCCH information of a neighboring cell; and
a second receiving unit, configured to receive the EPDCCH information of the serving cell on the time-frequency resource determined by the third determining unit.

30. The apparatus according to claim 29, wherein the third determining unit is configured to:
determine, according to a detected primary synchronization signal PSS or secondary synchronization signal SSS of the serving cell, the time-frequency resource used by the EPDCCH information of the serving cell; or
acquire a physical cell identifier PCI of the serving cell according to a detected PSS and a detected SSS of the serving cell, and determine, according to the PCI of the serving cell, the time-frequency resource used by the EPDCCH information of the serving cell; or
determine, according to a detected physical control format indicator channel PCFICH of the serving cell, the time-frequency resource used by the EPDCCH information of the serving cell.

31. The apparatus according to claim 30, wherein the third determining unit is specifically configured to:
determine a numerical value N, wherein the numerical value N is an integer greater than 1; and
determine, according to a result of the PSS, SSS, or PCI modulo the numerical value N, the time-frequency resource that is used by the EPDCCH information of the serving cell and corresponding to the result.

32. The apparatus according to claim 29, wherein the third determining unit is configured to:
determine, according to a received master information block MIB of the serving cell, the time-frequency resource used by the EPDCCH information of the serving cell.

33. An information transmission apparatus, comprising:
a fourth determining unit, configured to determine a time-frequency resource used by enhanced physical downlink control channel EPDCCH information of a serving cell, wherein the time-frequency resource used by the EPDCCH information of the serving cell is different from a time-frequency resource used by EPDCCH information of a neighboring cell; and
a second sending unit, configured to send the EPDCCH information of the serving cell on the time-frequency resource determined by the fourth determining unit.

34. The apparatus according to claim 33, wherein the fourth determining unit is configured to:
determine, according to a detected primary synchronization signal PSS or secondary synchronization signal SSS of the serving cell, the time-frequency resource used by the EPDCCH information of the serving cell; or
acquire a physical cell identifier PCI of the serving cell according to a detected PSS and a detected SSS of the serving cell, and determine, according to the PCI of the serving cell, the time-frequency resource used by the EPDCCH information of the serving cell; or
determine, according to a detected physical control format indicator channel PCFICH of the serving cell, the time-frequency resource used by the EPDCCH information of the serving cell.

35. The apparatus according to claim 34, wherein the fourth determining unit is specifically configured to:
determine a numerical value N, wherein the numerical value N is an integer greater than 1; and
determine, according to a result of the PSS, SSS, or PCI modulo the numerical value N, the time-frequency resource that is used by the EPDCCH information of the serving cell and corresponding to the result.

36. The apparatus according to claim 33, wherein the fourth determining unit is configured to:
determine, according to a sent master information block MIB of the serving cell, the time-frequency resource used by the EPDCCH information of the serving cell.

37. A user equipment, comprising:
a processor, configured to determine a time-frequency resource used by a master information block MIB or enhanced physical downlink control channel EPDCCH information of a serving cell, wherein the time-frequency resource used by the MIB or EPDCCH information of the serving cell is different from a time-frequency resource used by an MIB or EPDCCH information of a neighboring cell; and
a receiver, configured to receive the MIB or EPDCCH information of the serving cell on the time-frequency resource.

38. The user equipment according to claim 37, wherein the processor is specifically configured to:
determine, according to a detected primary synchronization signal PSS, secondary synchronization signal SSS, physical cell identifier PCI, or physical control format indicator channel PCFICH of the serving cell, the time-frequency resource used by the MIB of the serving cell; or
determine, according to a detected primary synchronization signal PSS, secondary synchronization signal SSS, physical cell identifier PCI, physical control format indicator channel PCFICH, or MIB of the serving cell, the time-frequency resource used by the EPDCCH information of the serving cell.

39. Abase station, comprising:
a processor, configured to determine a time-frequency resource used by a master information block MIB or enhanced physical downlink control channel EPDCCH information of a serving cell, wherein the time-frequency resource used by the MIB or EPDCCH information of the serving cell is different from a time-frequency resource used by an MIB or EPDCCH information of a neighboring cell; and
a transmitter, configured to send the MIB or EPDCCH information of the serving cell on the time-frequency resource.

40. The base station according to claim 39, wherein the processor is specifically configured to:
determine, according to a detected primary synchronization signal PSS, secondary synchronization signal SSS, physical cell identifier PCI, or physical control format indicator channel PCFICH of the serving cell, the time-frequency resource used by the MIB of the serving cell; or
determine, according to a detected primary synchronization signal PSS, secondary synchronization signal SSS, physical cell identifier PCI, physical control format indicator channel PCFICH, or MIB of the serving cell, the time-frequency resource used by the EPDCCH information of the serving cell.
